Europäisches Patentamt

(19) European Patent Office
Office européen des brevets

(11) Publication number: **0 050 443**
**B1**

(12) **EUROPEAN PATENT SPECIFICATION**

(45) Date of publication of patent specification: **07.05.86**

(21) Application number: **81304643.0**

(22) Date of filing: **07.10.81**

(51) Int. Cl.⁴: **G 02 C 11/06, G 02 B 27/00, G 10 L 5/00**

(54) Method and apparatus for automatic cuing.

(30) Priority: **17.10.80 US 198211**

(43) Date of publication of application:
**28.04.82 Bulletin 82/17**

(45) Publication of the grant of the patent:
**07.05.86 Bulletin 86/19**

(84) Designated Contracting States:
**BE CH DE FR GB LI NL SE**

(56) References cited:
**US-A-3 463 885**
**US-A-3 936 605**
**US-A-4 117 265**

**IEEE Transactions, Vol. ASST-23, Feb. 75, pp. 54-67**

**IEEE Transactions, Vol. ASST-24, Apr. 76, pp. 170-182**

(73) Proprietor: **RESEARCH TRIANGLE INSTITUTE**
**Post Office Box 12194 Research Tringle Park**
**Durham North Carolina (US)**
(73) Proprietor: **GALLAUDET COLLEGE**
**7th Street N.E. Florida Avenue**
**N.E. Washington Columbia 20002 (US)**

(72) Inventor: **Cornett, Orin R.**
**8702 Royal Ridge Lane**
**Laurel Maryland 20811 (US)**
Inventor: **Beadles, Robert L.**
**5435 Lakeview Drive**
**Durham North Carolina 27712 (US)**

(74) Representative: **Harrison, David Christopher**
**et al**
**MEWBURN ELLIS & CO 2/3 Cursitor Street**
**London EC4A 1BQ (GB)**

Courier Press, Leamington Spa, England.

# Description

The present invention relates to a method and apparatus for producing an image of speech information, particularly a symbol indicating one of a plurality of groups of detected sounds, and projecting that image in a mode indicating a sequence of syllables into the field of view of a hearing impaired wearer of the device.

Innumerable situations exist in which it is desirable to supply information to an individual by superimposing an image onto his normal field of vision. One example where such a display is needed is for the projection of symbols indicating one of a plurality of detected groups of sounds onto the field of vision of a deaf or hearing impaired person.

Communication in any spoken language is made up of sequences of sounds which are called phonemes. By observation of the movements of the lips of a speaking person, a hearing impaired or deaf person can discern that each sound is one of a limited number of possible phonemes. Unfortunately, however, the ambiguities for a totally deaf person are too great for effective communication to take place using only lipreading.

If a person has some aid in resolving ambiguities, for example, understanding of an additional 10—20% of phonemes in addition to those understood by lipreading alone, then enough of the information in the speech can be understood by a trained lipreader for effective transfer of information. Often a lipreader will have limited hearing sufficient for this purpose. Alternatively, manual cuing, a technique developed by Orin Cornett of Gallaudet College, and one of the co-inventors of the present application, utilizes hand cues to remove sufficient ambiguities to make lipreading practical. The difficulty with manually cued speech, of course, is that it can be used only with those individuals who have been trained to use it, thus limiting severely the number of people whom a deaf person can understand.

The different sounds of any language have different waveform characteristics which permit limited differentiation into different groups of sounds. These basic analyzing techniques are old and are described, for example, in pages 139—158, J. L. Flanagan, *Speech Analysis, Synthesis and Perception,* Academic Press, 1965. Using these analytic techniques, signals can be produced from detected spoken sounds, each signal indicating one of a plurality of different sound groups. The sounds in each group are differentiable on the lips so that, if this information can be effectively communicated to the lipreader, sufficient ambiguities can be removed to permit effective lipreading.

One way to communicate sufficient information to a lipreader to make lipreading truly effective is to superimpose a symbol identifying a sound group upon the viewer's field of vision which he can see as he watches a speaker's lips. This basic technique is described in U.S.—A—3,463,885 and 3,936,605. In both of these patents a display is disclosed which is mounted upon a pair of spectacles intended to be worn by the hearing impaired of deaf person. In the system described in US—A—3,463,885, three types of sounds are detected — fricative, plosive and voiced. Signals such as a number of bulbs are mounted on a lens of the spectacles, and each associated with one of these types of sounds. The associated bulb is activated when that type of sound is detected. Single sounds which are a combination of these different types of sounds may activate one or more bulbs. "Colour coding" is suggested but not explained. In US—A—3,936,605, seven-bar figures are used. The bars are illuminated in response to the same three types of sounds, two of them being reserved for "combinations", in a single sound. "Colour coding" is again mentioned. In US—A—4,117,265 different pitches of sound are displayed by two or three colour sources which may overlap and thereby indicate gradations of sound, which is not necessarily speech sound.

One of the difficulties with these systems is that each of its indications is at most that of a single phoneme, and, at normal rates of speaking, the sounds occur so quickly that it is doubtful that they can be effectively used at that rate by the brain. According to the present invention, this problem is reduced by a single display offering information about sequential speech elements, i.e., normally a combination of a consonant sound and a vowel sound, although occasionally a single phoneme i.e. consonant followed by no vowel, or vowel followed by no consonant, can be a syllable. Each symbol represents one of the sequential speech elements and is made apparent in the field of view of the user at a location (or in a colour) appropriate to the other element of the sequential elements. One way that syllable information can be displayed is with a symbol indicating one of a plurality of consonant sounds in a location indicating associated vowel sounds. For example, a symbol indicating one of nine consonants can be projected to one of four spatial locations i.e., quadrants, the spatial location indicating the associated vowel. Another approach is to project the symbol in one of a number of colours, for example, four, each colour indicating a vowel.

The invention also includes a method of providing cues to a hearing-impaired or deaf person to aid in resolving ambiguities from lipreading another person comprising the steps of:

detecting sequential speech elements constituting syllables from the other person each syllable containing the elements consonant followed by vowel, consonant followed by no vowel, or vowel followed by consonant; and producing electrical signals indicating the characteristics of said elements; and

producing an image of one of a plurality of symbols each symbol being associated with at least one selected speech element and projecting that image into a location or in a colour in the field of view of said hearing-impaired or deaf person dependent on the other of the sequential speech elements, whereby the display of that symbol at that location or in that colour presents information about a plurality of characteristics of the syllable.

Other objects and purposes of the invention will be clear from the following detailed description of the drawings.

FIGURE 1 shows a perspective view of the device of the present invention mounted on an eyeglass frame;

FIGURE 2 shows a view of one of the symbols of the present invention superimposed upon an image in the field of view;

FIGURE 3 shows a diagram of the consonant and vowel groups;

FIGURE 4 shows a block diagram of the circuit which produces signals indicating the consonant and vowel groups.

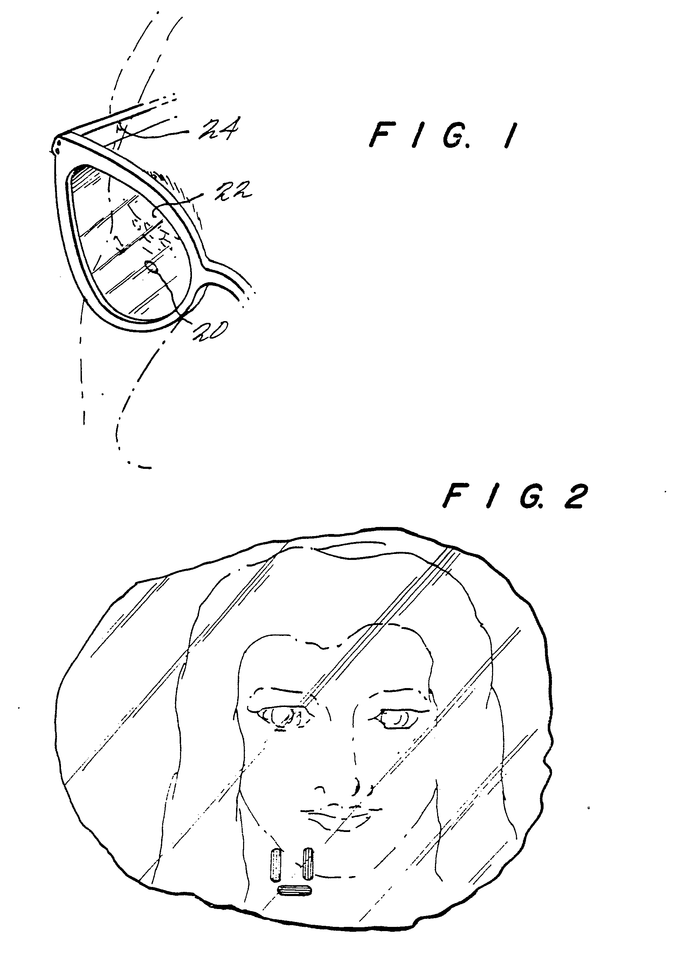

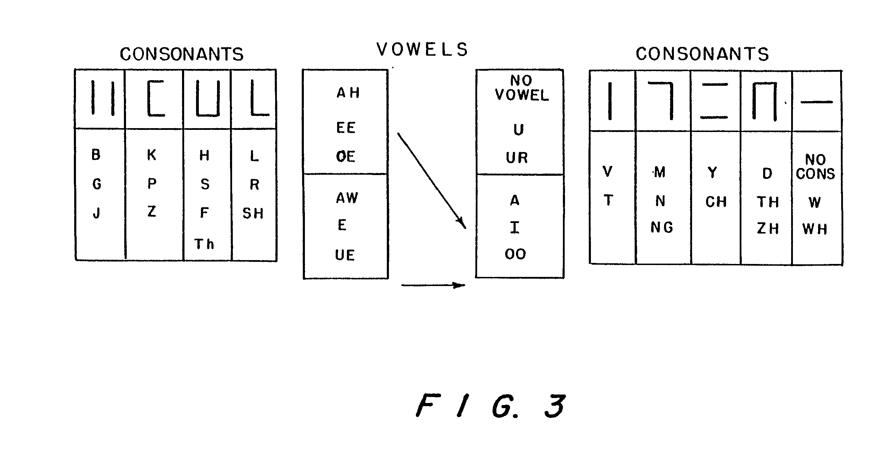

Reference is now made to FIGURES 1 and 2 which show a schematic view of the display 20 of the present invention mounted on a conventional prescription lens 22 which is in turn mounted within a conventional eyeglass frame 24 and producing a symbol superimposed on the field of view. As discussed in detail below, display 20 produces an image of one of a number of different symbols, each symbol being associated with one of a number of groups of consonants as shown in FIGURE 3, and projected in a mode identifying a group to which an associated vowel is assigned. For example, each symbol can be projected to one of four quadrants, each quadrant being associated with a different group of vowels, the combination of the consonant symbol and its location defining a syllable. Alternatively, the color of the symbol can indicate the vowel group by activating one or more displays of different colors or controlling a conventional multi-color display.

Techniques for producing and projecting single color symbols are described in the above-mentioned book.

FIGURE 3 illustrates one possible set of groupings of consonants and vowels and the associated consonant symbols and vowel locations or other modes of presentation. With the exception of the group of consonants containing "n" and "ng", the consonants of each group can be readily differentiated by a lipreader from each of the other consonants of that group from observation of the speaker's mouth alone. The single exception causes minimal linguistic confusion in English because discrimination between "n" and "ng" is rarely required for understanding. Some syllables have no vowels and rapidly spoken syllables often have a vowel which may not be detected. The detected absence of a vowel is treated as a component of one vowel group. Absence of a consonant is treated similarly. Diphthongs are handled by movement of the symbol from one quadrant position to another, based upon the vowel components of the diphthong as schematically shown in FIGURE 3.

Display 20 may be any conventional display which can project a symbol identifying a consonant in a mode identifying a vowel or vice versa. One suitable display is made up of two light emitting or illuminated arrays, and structure defining a beamsplitter associated with each of the respective arrays. The beamsplitter is formed by a coating of silver, aluminum or the like coated onto the interior surface of a conventional prescription lens of glass or suitable plastic. The arrays are mounted upon a transparent substrate by any suitable means, and the substrate in turn fixed at its extremities to the prescription lens by any suitable means.

The lens is first ground to the required outer radius to provide the desired prescription, if any. Next, spherical dimples are ground on the inner surface of the lens to a radius suitable to provide the desired magnification. The interior surface of the lens is next optically coated with a coating, for example, by deposition in a vacuum. The dimples are then back filled with material having the same, or virtually the same index of refraction as the material of the lens. The material filling the dimples may be the same material as the lens.

Alternatively, the interior surface of the lens is curved at a short enough radius to project a suitably magnified symbol image without dimples.

Either the top portion or the lower portion of one display is actuated to cause production of a symbol with the associated mirror then projecting that symbol to one of four quadrants. In other words, each display projects to an upper or lower spatial location depending on whether the upper or lower portion is activated.

As described above, a symbol indicating a group of consonants, for example, as shown in FIGURE 3, is projected to a quadrant indicating the group to which an associated vowel belongs. Alternatively, the color of the symbol can indicate the vowel group.

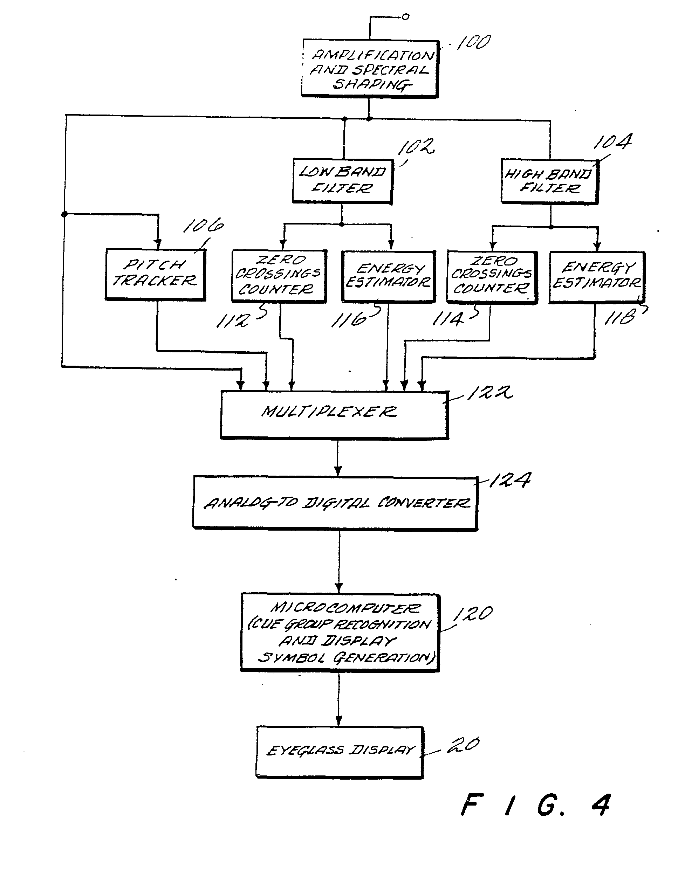

Reference is now made to FIGURE 4 which shows in block diagram an analyzing circuit for producing signals to cause display of detected syllables. The detected sound signals are first amplified and shaped by a conventional circuit 100 and applied to conventional low-pass and high-pass filters 102 and 104. The outputs of filters 102 and 104 are in turn applied to zero crossing counters 112 and 114, respectively, and energy estimating circuits 116 and 118, respectively.

The energy estimating circuits average, that is, integrate the energy content of the electrical signal on short intervals, for example, 10 milliseconds, in both high and low frequency bands. Microcomputer 120 which receives signals via multiplexer 122 and analog-to-digital converter 124 first looks for peaks, valleys and major slope changes in the energy estimated signals for the high frequency band. Significant peaks are "marked" as potential phoneme "centers". Significant valleys or major slope changes are marked as phoneme "boundaries", that is, the beginning and end of a potential phoneme. The centers are used for spectral analysis as described in the book by Flanagan set forth above. This primary segmentation finds approximately 70% of the phonemes.

Secondary segmentation is then used to check the phonemes found by primary segmentation and to find additional phonemes. In secondary segmentation, the duration, energy, voice pitch, spectral content and energy ratio between low and high frequency regions are examined to attempt to pick up phonemes not detected during primary segmentation. After the secondary determination, there are no indeterminate regions left and all of the information can be examined to decide whether each phoneme is a vowel or consonant.

The low frequency energy estimator circuit 116 is utilized to produce independent markers to determine if the high frequency marked region is a consonant or a vowel. The regions between boundaries of the high frequency markers are examined to detect silent intervals preceding bursts of stop sounds, nasal sounds or liquid, i.e., semi-vowel sounds.

The vowel, non-vowel decision is made by computing the linear prediction co-efficients at energy peaks, i.e., locations of "center" marks. Techniques for performing linear prediction are discussed in further detail in R.W. Schafer, *Digital Signal Processing and Speech Analysis and Synthesis*, Proceedings of the IEEE Fall Electronics Conference, Chicago, Illinois, October 1971, pp. 29—30.

If computer 120 decides that a given sound is a consonant, then the cue group code for that consonant is stored and the next sound is classified. As soon as a vowel is identified, a signal is produced indicating where the preceding consonant signal is to be projected, that is, into which quadrant. If the following sound is not a vowel, the consonant is displayed for the duration of the consonant. If the first sound is a vowel, the "no consonant" symbol is displayed. The circuitry is reset after each pause.

Not infrequently, two centers will be marked between a pair of boundaries. This may indicate a diphthong. High frequency and low frequency spectral estimates are then inspected to determine if they are characteristic of the first vowel in a diphthong. If so, the second peak is examined to determine if it has the minimum distance from the first peak, and its spectral energy is consistent with most prevalent diphthong second vowels.

The delays in the system are roughly one syllable, that is, 200 milliseconds, so that each syllable is normally displayed while the succeeding syllable is being spoken. At least some syllables will not be detected nor displayed.

As described above, the basic techniques for detecting and classifying the individual phonemes are well known in the art and in the literature described above. Any suitable microprocessor can be utilized for performing the necessary calculations and logical decisions.

## Claims

1. An apparatus for providing a display of a speech cuing symbol in the field of vision of a person comprising:

means for detecting (100—124) speech elements and producing a speech electrical signal having characteristics associated with each said detected element;

circuit means (120) for receiving said speech signal, and producing one of a plurality of symbol signals in accordance with said characteristics; and

means (20) for providing a display image in said field of view to indicate at least some of said symbols;

characterised in that:

the circuit means is capable of determining combinations of sequential speech elements at least one of which is a second and which together form a syllable which contains the elements consonant followed by vowel, consonant followed by no vowel, or vowel followed by no consonant; each symbol representing one of the sequential speech elements and being made apparent in the field of view at a location selected from a plurality of locations in the field of view or in a selected colour which is appropriate for the other element of the syllable.

2. An apparatus according to claim 1, wherein the symbols on the one hand and the locations of colours on the other are assigned one to groups of vowel sounds and the other to groups of consonant sounds.

3. An apparatus according to Claim 1 or Claim 2 wherein said circuit means (120) includes means for producing one of a plurality of consonant symbol signals in response to a detected consonant, each consonant symbol signal representing a group of consonants, and for producing one of a plurality of vowel symbol signals in response to a detected vowel, each vowel symbol signal representing a group of vowels and means (20) for providing a display image being adapted to project a consonant symbol to a location associated with a vowel symbol when that consonant and vowel together form a syllable.

4. An apparatus according to any one of the preceding claims wherein the display means is mounted in a spectacle frame (22).

5. A method of providing cues to a hearing-impaired or deaf person to aid in resolving ambiguities from lipreading another person comprising the steps of:

detecting sequential speech elements constituting syllables from the other person each syllable containing the elements consonant followed by vowel, consonant followed by no vowel, or vowel followed by consonant; and producing electrical signals indicating the characteristics of said elements; and

producing an image of one of a plurality of symbols each symbol being associated with at least one selected speech element and projecting that image into a location or in a colour in the field of view of said hearing-impaired or deaf person dependent on the other of the sequential speech elements, whereby the display of that symbol at that location or in that colour presents information about a plurality of characteristics of the syllable.

## Revendications

1. Dispositif pour former un affichage d'un symbole indicateur d'une parole dans le champ de vision d'une personne, comprenant:
 — des moyens (100—124) pour détecter les éléments de paroles et produire un signal électrique de parole possédant des caractéristiques associées à chaque élément détecté,
 — des moyens du type circuit (120) destinés à recevoir ledit signal de parole et à produire l'un de plusieurs signaux de symboles en fonction desdites caractéristiques, et
 — des moyens (20) servant à produire une image affichée dans ledit champ de vision pour indiquer au moins l'un desdits symboles, caractérisé en ce que:
 — les moyens du type circuit sont capables de déterminer des combinaisons d'éléments séquentiels de paroles dont au moins l'un est un son et qui, ensemble, forment une syllable qui contient les éléments consonne suivie de voyelle, consonne non suivie de voyelle, ou voyelle non suivie de consonne; chaque symbole représentant l'un des éléments séquentiels de parole et étant rendu visible dans le champ de vision en un emplacement choisi parmi une série d'emplacements du champ de vision, ou dans une couleur choisie, qui correspond pour l'autre élément de la syllable.

2. Dispositif selon la revendication 1, dans lequel les symboles, d'une part et les emplacements ou les couleurs, d'autre part, sont respectivement affectés l'un à des groupes de sons de voyelles et l'autre à des groupes de sons de consonnes.

3. Dispositif selon la revendication 1 ou 2, caractérisé en ce que lesdits moyens du type circuit (120) comprennent des moyens pour produire l'un de plusieurs signaux de symboles de consonnes en réponse à une consonne détectée, chaque signal de symbole de consonne représentant un groupe de consonnes, et pour produire l'un de plusieurs signaux de symboles de voyelles en réponse à une voyelle détectée, chaque signal de symbole de voyelle représentant un groupe de voyelles, et des moyens (20) pour fournir une image d'affichage qui sont adaptés pour projeter un symbole de consonne dans un emplacement associée à un symbole de voyelle lorsque la consonne et la voyelle forment ensemble une syllable.

4. Dispositif selon l'une quelconque des revendications précédentes, dans lequel les moyens d'affichage sont montés dans une monture de lunettes (22).

5. Procédé pour fournir à une personne malentendante ou sourde des indications pour l'aider à résoudre les ambiguïtés de la lecture sur les lèvres d'une autre personne, comprenant les phases consistant à:
 — détecter des éléments de parole séquentiels qui constituent les syllables émises par l'autre personne, chaque syllable contenant les éléments consonne suivie de voyelle, consonne non suivie de voyelle ou voyelle suivie de consonne et produire des signaux électriques indiquant les caractéristiques desdits éléments,
 — produire une image de l'un de plusieurs symboles, chaque symbole étant associé à au moins un signal de parole choisi et projeter cette image dans le champ de vision de ladite personne mal entendante ou sourde dans un emplacement ou dans une couleur qui dépend de l'autre des éléments séquentiels de parole, de sorte que l'affichage de ce symbole dans cet emplacement ou dans cette couleur présente une information sur une série de caractéristiques de la syllable.

## Patentansprüche

1. Vorrichtung zur Schaffung einer Anzeige von einem Sprach- oder Lautsymbol im Sichtfeld einer Person, mit:
 Mitteln zum Erkennen (100—124) von Sprachelementen und zum Erzeugen eines elektrischen Sprachsignals, das jedem der erkannten Elemente zugehörige Eigenschaften aufweist;
 Schaltkreismitteln (120) zum Aufnehmen des Sprachsignals und zur Erzeugung eines aus einer Anzahl von Symbolsignalen gemäß den Eigenschaften; und mit
 Mitteln (20) zur Schaffung eines Anzeigebildes in dem Gesichtsfeld zur Anzeige von zumindest einigen der Symbole;
 dadurch gekennzeichnet, daß:
 das Schaltkreismittel in der Lage ist, Kombinationen von aufeinanderfolgenden Sprachelementen zu unterscheiden, von denen zumindest eines ein Laut ist und die zusammen eine Silbe bilden, die die Elemente Konsonant gefolgt von Vokal, Konsonant ohne nachfolgenden Vokal oder Vokal ohne nachfolgenden Konsonanten enthält; wobei jedes Symbol eines der sequentiellen Sprachelemente darstellt und im Gesichtsfeld an einer Stelle sichtbar gemacht wird, die aus einer Anzahl von Stellen in dem Gesichtsfeld oder in einer bestimmten Farbe ausgewählt ist, die für das andere Element der Silbe richtig ist.

2. Vorrichtung nach Anspruch 1, dadurch gekennzeichnet, daß die Symbole einerseits und die Orte der Farben andererseits einmal der Gruppe von Vokallauten und zum anderen der Gruppe von Konsonantlauten zugeordnet sind.

3. Vorrichtung nach Anspruch 1 oder 2, dadurch gekennzeichnet, daß das Schaltkreismittel (120) Mittel zur Erzeugung eines aus einer Anzahl von Konsonantensymbolsignalen in Abhängigkeit von einem erkannten Konsonanten aufweist, wobei jedes Konsonantensymbolsignal eine Gruppe von Konsonanten darstellt, und daß zur Erzeugung eines aus einer Anzahl von Vokalsymbolsignalen in Abhängigkeit von einem erkannten Vokal jedes Vokalsymbolsignal eine Gruppe von Vokalen darstellt und daß Mittel (20) zur Schaffung eines Anzeigebildes vorgesehen sind, die so gestaltet sind, daß ein Konsonantensymbolsignal auf eine Stelle projiziert wird, die einem Vokalsymbol zugeordnet ist, wenn der Konsonat und der Vokal zusammen eine Silbe bilden.

4. Vorrichtung nach einem der vorhergehenden Ansprüche, dadurch gekennzeichnet, daß das Anzeigemittel auf einem Brillenrahmen (22) angebracht ist.

5. Verfahren zum Schaffen von Hinweisen für eine gehörgeschädigte oder taube Person, um Zweifel beim Lippenlesen von einer anderen Person auszuräumen, gekennzeichnet durch die Schritte:

Erkennen von sequentiellen Sprachelementen, die Silben von der anderen Person bilden, wobei jede Silbe die Elemente Konsonant gefolgt von Vokal, Konsonant gefolgt von keinem Vokal oder Vokal gefolgt von einem Konsonanten aufweist; und Erzeugen von elektrischen Signalen, welche die Eigenschaften der Elemente anzeigen; und

Erzeugen eines Bildes von einem von einer Anzahl von Symbolen, wobei jedes Symbol mindestens einem ausgewählten Sprachelement zugeordnet ist und Projizieren des Bildes an eine Stelle oder in einer Farbe im Gesichtsfeld der gehörgeschädigten oder tauben Person in Abhängigkeit von dem anderen der sequentiellen Sprachelemente, wodurch die Anzeige des Symbols an der Stelle oder in der Farbe Information über eine Anzahl von Eigenschaften der Silbe darstellt.

F I G. 1

F I G. 2

CONSONANTS

| B G J | K P Z | H S F Th | L R SH |
|---|---|---|---|

VOWELS

| A H EE OE | AW E UE |
|---|

| NO VOWEL U UR | A I OO |
|---|

CONSONANTS

| V T | M N NG | Y CH | D TH ZH | NO CONS W WH |
|---|---|---|---|---|

F I G. 3

0 050 443

**F I G. 4**